# EUROPÄISCHE PATENTSCHRIFT

(11) **EP 3 024 679 B1**
(45) Veröffentlichungstag und Bekanntmachung des Hinweises auf die Patenterteilung: **14.06.2017**
(21) Anmeldenummer: 14738385.5
(22) Anmeldetag: 02.07.2014
(51) Int. Cl.: B60J 10/18, B60J 10/30, B60J 10/34, B60J 10/70

(54) **ABDICHTUNGSPROFIL ZUM ANSCHLUSS EINES ANBAUTEILS AN EINE SCHEIBE, SOWIE ABDICHTUNGSANORDNUNG**
SEALING PROFILE FOR CONNECTING AN ATTACHMENT PART TO A WINDOW, AND SEALING ARRANGEMENT
PROFIL D'ÉTANCHÉITÉ DESTINÉ À LA JONCTION D'UNE PIÈCE RAPPORTÉE À UNE VITRE AINSI QU'ARRANGEMENT D'ÉTANCHÉITÉ

(30) Priorität: 23.07.2013 DE 202013103287 U
(43) Veröffentlichungstag der Anmeldung: 01.06.2016
(73) Patentinhaber: REHAU AG + Co, 95111 Rehau (DE)
(72) Erfinder: FRANK, Michael, 95145 Oberkotzau (DE); RINCK, Kay-Jochen, 95032 Hof (DE); LAUKANT, Holger, 95032 Hof (DE)
(86) Internationale Anmeldenummer: PCT/EP2014/001816
(87) Internationale Veröffentlichungsnummer: WO 2015/010764

(56) Entgegenhaltungen:
- EP-A1- 0 249 560
- DE-A1-102010 056 495
- DE-A1-102011 056 955
- DE-U1-202008 006 986
- FR-A1- 2 565 621

## Beschreibung

Die Erfindung betrifft ein Abdichtungsprofil zum Anschluss eines Anbauteils an eine Scheibe eines Kraftfahrzeuges, mit einem Halteprofil aufweisend
- einen Halteschenkel, der im Montagezustand an der unteren Oberfläche der Scheibe befestigt ist,
- ein Aufnahmeprofil zur Aufnahme eines Anschlusselementes des Anbauteils,
- einen im Montagezustand zwischen Anbauteil und Scheibe angeordneten Stützkörper und
- eine am Stützkörper angeordnete Dichtlippe, die im Montagezustand zumindest an der Scheibe dichtend anliegt.

Ein derartiges Abdichtungsprofil ist beispielsweise aus der EP 1 280 675 B1 bekannt. Das in dieser Druckschrift beschriebene Abdichtungsprofil dient zum Anschluss einer Wasserkastenabdeckung an den unteren Rand einer Windschutzscheibe eines Kraftfahrzeuges. Wesentlich bei diesem Stand der Technik ist, dass die einander benachbarten Oberflächen von Scheibe, Wasserkastenabdeckung und dazwischen angeordneter Dichtlippe fluchten, so dass insgesamt eine glatte Oberfläche vorliegt. Auch aus den Dokumenten DE 20 2008 006 986 U1 und EP 0 249 560 A1 sind gattungsgemäße Abdichtungsprofile bekannt.

In jüngerer Zeit gewinnt das Thema Schallemission im Inneren eines Kraftfahrzeugs zunehmend an Bedeutung. Dies führt dazu, dass Windschutzscheiben tendenziell immer dicker werden, um hierdurch Schallemissionen von der Fahrgastzelle fernzuhalten. Hieraus ergibt sich in der Praxis häufig das Problem, dass die Oberflächen von Windschutzscheibe und Wasserkastenabdeckung nicht mehr fluchtend zueinander ausgerichtet sein können, sondern stattdessen zwischen diesen Oberflächen ein Höhenversatz vorliegt. Dieser Höhenversatz der Wasserkastenabdeckung nach unten hat auch gewisse sicherheitstechnische Vorteile, wenn die Scheibenwischer der Windschutzscheibe in Ruheposition auf der Wasserkastenabdeckung zu liegen kommen. Denn durch den Höhenversatz der Wasserkastenabdeckung ist die Ruheposition der Scheibenwischer entsprechend gegenüber der Windschutzscheibe auch etwas niedriger, was in einer Unfallsituation bei einem Aufprall eines Fußgängers auf die Motorhaube/Windschutzscheibe das Verletzungsrisiko reduziert. Vor diesem Hintergrund liegt der Erfindung die Aufgabe zugrunde, ein Abdichtungsprofil mit den eingangs beschriebenen Merkmalen anzugeben, welches auch bei einem Höhenversatz zwischen Scheibe und Anschlusselement einsetzbar ist.

Erfindungsgemäß wird die Aufgabe durch die Merkmale des Anspruchs 1 gelöst. Erfindungsgemäß wird also von dem aus der EP 1 280 675 B1 bekannten Stand der Technik abgewichen, der grundsätzlich von einem Fluchten von Scheibenoberfläche und Oberfläche der Wasserkastenabdeckung ausgeht. Erfindungsgemäß wird durch die schräg ausgerichtete freie Oberfläche der Dichtlippe der Höhenversatz zwischen der oberen Oberfläche der Windschutzscheibe und der oberen Oberfläche der Wasserkastenabdeckung teilweise ausgeglichen. Dies führt vorteilhafterweise dazu, dass trotz des Höhenversatzes eine störungsfreie Wischbewegung eines Scheibenwischers über das untere Ende der Windschutzscheibe hinweg und auch zurück möglich ist. Die schräge Ausrichtung der Dichtlippe verhindert einen großen "Höhensprung" zwischen der Unterkante der Windschutzscheibe und dem oberen Rand der Wasserkastenabdeckung, so dass erfindungsgemäß die Funktionssicherheit eines Scheibenwischers auch beim Überstreichen dieses Übergangsbereichs gewährleistet ist. Die im Montagezustand freie Oberfläche der Dichtlippe entspricht in der Regel dem außen am Fahrzeug sichtbaren Bereich des Halteprofils. Erfindungsgemäß ist die freie Oberfläche der Dichtlippe eben ausgebildet. Dies ermöglicht einen möglichst gleichmäßigen Übergang von der Windschutzscheibe hin zur Wasserkastenabdeckung. Erfindungsgemäß ist die freie Oberfläche zum Aufnahmeprofil hin geneigt. Dies ist insbesondere dann vorteilhaft, wenn die obere Oberfläche der Scheibe höher angeordnet ist als die Oberkante der Wasserkastenabdeckung. Der von der freien Oberfläche der Dichtlippe und der Halteschenkelebene eingeschlossene spitzer Winkel beträgt erfindungsgemäß mindestens 3°, beispielsweise mindestens 5°. Insbesondere bei einem großen Höhenversatz zwischen Scheibe und Wasserkastenabdeckung sind zweckmäßigerweise größere Neigungswinkel zweckdienlich.

Die Dichtlippe kann im Montagezustand einen zumindest im Wesentlichen trapezförmigen Querschnitt aufweisen. Trapezförmig meint einen viereckigen Querschnitt, bei dem mindestens zwei Seiten des Vierecks parallel zueinander ausgerichtet sind. Dies sind zweckmäßigerweise die Flächen der Dichtlippe, welche der Wasserkastenabdeckung bzw. der Scheibe zugewandt sind. Entsprechend liegt eine dieser beiden parallel zueinander ausgerichteten Flächen der Dichtlippe an der Scheibe dichtend an und verhindert an dieser Stelle ein Eindringen von Wasser in den Bereich unterhalb der Scheibenoberkante. Zwischen der der Wasserkastenabdeckung zugewandten Fläche der Dichtlippe und der Wasserkastenabdeckung selbst kann ebenfalls ein mehr oder weniger stark ausgeprägter Anschlag mit entsprechender Presswirkung vorliegen. Im Rahmen der Erfindung liegt es aber auch, dass hier ein kleiner freier Spalt vorliegt.

Zweckmäßigerweise schließt die freie Oberfläche der Dichtlippe mit dem länglich ausgebildeten Stützkörper einen spitzen Winkel ein. Im Rahmen der Erfindung liegt es aber auch, dass diese freie Oberfläche zumindest im Wesentlichen parallel zum länglichen Stützkörper ausgerichtet ist.

Gegenstand der Erfindung ist ferner eine Abdichtungsanordnung nach Anspruch 7. Erfindungswesentlich bei dieser Abdichtungsanordnung ist, dass der Höhenversatz zwischen Scheibe und Anbauteil nicht vollständig durch die schräge Oberfläche der Dichtlippe ausgeglichen wird. Stattdessen verbleibt bewusst am Übergang zwischen dem oberen Rand der Scheibe und dem oberen Rand der Dichtlippe und/oder am Übergang zwischen dem oberen Rand der Dichtlippe und dem oberen Rand des Anbauteils ein Höhenversatz. Hierdurch ist sichergestellt, dass auch unter Berücksichtigung fertigungstechnisch bedingter Toleranzen in jedem Fall kein Überstehen der Dichtlippe beim Übergang von der Scheibe zur Dichtlippe bzw. kein Überstand der Wasserkastenabdeckung beim Übergang von der Dichtlippe hin zur Wasserkastenabdeckung vorliegt. Diese Gefahr bestünde, sofern durch die schräge Ausrichtung der Oberfläche der Dichtlippe jeweils ein exakter Anschluss an die Höhe der Scheibe bzw. der Höhe der Wasserkastenabdeckung angestrebt wird. Zweckmäßigerweise springt von der Außenoberfläche der Scheibe aus gesehen die Dichtlippe um einen ersten Höhenversatz s₁ und / oder das Anbauteil um einen Höhenversatz s₂ nach unten. Es erfolgt also erfindungsgemäß eine Kombination von Höhenausgleich durch eine schräge Oberfläche der Dichtlippe und bewusst vorgesehener, verbleibender kleiner Höhendifferenz s₁ und / oder s₂ in den Übergangsbereichen, so dass in jedem Fall ein toleranzbedingter störender Überstand vermieden wird. Zweckmäßigerweise beträgt der Höhenversatz s₁ und / oder der Höhenversatz s₂ mindestens 1 mm, z.B. mindestens 1,5 mm.

Im Folgenden wird die Erfindung anhand einer lediglich ein Ausführungsbeispiel darstellenden Zeichnung ausführlich erläutert:

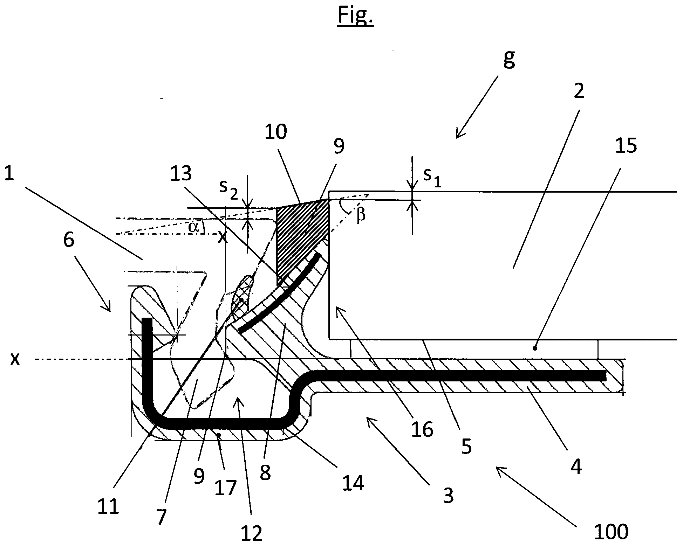

Die einzige Figur zeigt schematisch ein erfindungsgemäßes Abdichtungsprofil sowie eine erfindungsgemäße Abdichtungsanordnung in der Querschnittsdarstellung im montierten Zustand.

Die Figur zeigt ein Abdichtungsprofil 100 zum Anschluss einer Wasserkastenabdeckung 1 an eine Windschutzscheibe 2 eines (nicht näher dargestellten) Kraftfahrzeuges. Das Abdichtungsprofil 100 weist ein extrudiertes Kunststoff-Halteprofil 3 auf. Dieses besitzt einen Halteschenkel 4, der im Montagezustand an der unteren, dem Kraftfahrzeugboden zugewandten (s.a. eingezeichnete Richtung der Gravitationskraft g) Oberfläche 5 der Scheibe 2 befestigt ist, ein als Rastprofil ausgebildetes Aufnahmeprofil 6 zur Aufnahme eines als Rastelement ausgebildeten Anschlusselementes 7 der Wasserkastenabdeckung 1 und ein im Montagezustand zwischen Wasserkastenabdeckung 1 und Windschutzscheibe 2 angeordneten Stützkörper 8. An dem Stützkörper 8 ist eine Dichtlippe 9 aus weichelastischem Material - beispielsweise einem elastomeren Kunststoff - angeordnet, die im Montagezustand an der Scheibe 2 dichtend anliegt. Der Figur ist entnehmbar, dass die Dichtlippe 9 an ihrem oberen Rand eine im Montagezustand freie Oberfläche 10 aufweist, die schräg zur Halteschenkelebene x ausgerichtet ist. Diese freie Oberfläche 10 ist eben ausgebildet und zum Aufnahmeprofil 6 hin geneigt. Es ist erkennbar, dass von der freien Oberflächen 10 und der Halteschenkelebene x (in der Figur parallel nach oben verschoben) ein spitzer Winkel α eingeschlossen wird. Dieser beträgt im Ausführungsbeispiel ca. 8°. Die Dichtlippe 9 weist im Montagezustand einen trapezförmigen Querschnitt auf, wobei die beiden parallel zueinander ausgerichteten Oberflächen der Dichtlippe 9 der Wasserkastenabdeckung 1 bzw. der Scheibe 2 zugewandt sind. Der Figur ist ferner entnehmbar, dass die freie Oberfläche 10 mit den länglich ausgebildeten Stützkörper 8 einen spitzen Winkel β einschließt. Im Rahmen der Erfindung liegen jedoch auch andere Anordnungen, insbesondere eine zueinander parallele Ausrichtung von freier Oberfläche 10 und länglichem Stützkörper 8.

Insgesamt zeigt die Figur eine Abdichtungsanordnung mit Scheibe 2, Wasserkastenabdeckung 1 und dem zuvor beschriebenen, zwischen Scheibe 2 und Wasserkastenabdeckung 1 angeordneten Abdichtungsprofil 100, welches zum Anschluss der Wasserkastenabdeckung 1 an die Scheibe 2 dient. Es ist erkennbar, dass am Übergang zwischen dem oberen Rand der Scheibe 2 und dem oberen Rand der Dichtlippe 9 ein Höhenversatz s₁ und ebenso am Übergang zwischen den oberen Rand der Dichtlippe 9 und dem oberen Rand der Wasserkastendeckung 1 ein Höhenversatz s₂ vorliegt. Von der Scheibe 2 aus gesehen springt die Dichtlippe 9 um den Höhenversatz s₁ und die Wasserkastenabdeckung 1 um den Höhenversatz s₂ nach unten. Sowohl der Höhenversatz s₁ als auch der Höhenversatz s₂ beträgt mindestens 1 mm.

Der Figur ist ferner entnehmbar, dass das Halteprofil 3 eine zweite Dichtlippe 11 aus einem weichelastischen Material aufweist. Diese zweite Dichtlippe 11 ist in der Figur im unbelasteten Zustand dargestellt. Bei der Montage der Wasserkastenabdeckung 1 rastet dessen Anschlusselement 7 in das Aufnahmeprofil 6 des Halteprofils 3 ein und drückt hierbei die zweite Dichtlippe 11 nach rechts, so dass sie den Rastbereich 12 des Aufnahmeprofils 6 gegen eindringende Feuchtigkeit abdichtet. Der Stützkörper 8 weist zur Verstärkung ein Armierungselement 13 auf. Es ist ferner erkennbar, dass Halteschenkel 4 und Aufnahmeprofil 6 über eine gemeinsame metallische Armierungslage 14 miteinander verbunden sind. Die Armierungseinlage 14 ist im Bereich des Anschlussprofils 6 lediglich bereichsweise vom Kunststoffmaterial umspritzt. Der Halteschenkel 4 ist mittels eines Klebstoffstreifens 15 an der unteren Oberfläche 5 der Scheibe 2 befestigt, während zwecks Herstellung einer sicheren Abdichtung des Übergangs zwischen Scheibe 2 und Stützkörper 8 durch die Dichtlippe 9 der Stützkörper gegen den unteren Scheibenrand 16 gepresst ist. Das Aufnahmeprofil 6 weist einen Bodenabschnitt 17 auf, der im wesentlichen parallel zur Halteschenkelebene x ausgerichtet ist.

## Patentansprüche

1. Abdichtungsprofil (100) zum Anschluss eines Anbauteils (1) an eine Scheibe (2) eines Kraftfahrzeuges, mit einem Halteprofil (3) aufweisend
- einen Halteschenkel (4), der im Montagezustand an der unteren Oberfläche (5) der Scheibe (2) befestigt ist,
- ein Aufnahmeprofil (6) zur Aufnahme eines Anschlusselements (7) des Anbauteils (1),
- einen im Montagezustand zwischen Anbauteil (1) und Scheibe (2) angeordneten Stützkörper (8) und
- einer am Stützkörper (8) angeordneten Dichtlippe (9), die im Montagezustand zumindest an der Scheibe (2) dichtend anliegt,
**dadurch gekennzeichnet, dass** die Dichtlippe (9) an ihrem oberen Rand eine im Montagezustand freie, eben ausgebildete Oberfläche (10) aufweist, die schräg zur Halteschenkelebene (x) ausgerichtet und zum Aufnahmeprofil (6) hin geneigt ist und dass der von der freien Oberfläche (10) und der Halteschenkelebene (x) eingeschlossene spitze Winkel (α) mindestens 3° beträgt.

2. Abdichtungsprofil (100) nach Anspruch 1, **dadurch gekennzeichnet, dass** der von der freien Oberfläche (10) und der Halteschenkelebene (x) eingeschlossene spitze Winkel (α) mindestens 5° beträgt.

3. Abdichtungsprofil (100) nach einem der Ansprüche 1 bis 2, **dadurch gekennzeichnet, dass** die Dichtlippe (9) im Montagezustand einen zumindest im wesentlichen trapezförmigen Querschnitt aufweist.

4. Abdichtungsprofil (100) nach einem der Ansprüche 1 bis 3, **dadurch gekennzeichnet, dass** die freie Oberfläche (10) mit dem länglich ausgerichteten Stützkörper (8) einen spitzen Winkel (β) einschließt.

5. Abdichtungsanordnung mit
- einer Scheibe (2) eines Kraftfahrzeugs,
- einem Anbauteil (1) und
- einem zwischen Scheibe (2) und Anbauteil (1) angeordneten Abdichtungsprofil (100) nach einem der Ansprüche 1 bis 4 zum Anschluss des Anbauteils (1) an die Scheibe (2),
**dadurch gekennzeichnet, dass** am Übergang zwischen dem oberen Rand der Scheibe (2) und dem oberen Rand der Dichtlippe (9) ein Höhenversatz (s₁) und/oder am Übergang zwischen dem oberen Rand der Dichtlippe (9) und dem oberen Rand des Anbauteils (1) ein Höhenversatz (s₂) vorliegt.

6. Abdichtungsanordnung nach Anspruch 5, **dadurch gekennzeichnet, dass** von der Scheibe (2) aus gesehen die Dichtlippe (9) um den Höhenversatz (s₁) und/oder das Anbauteil (1) um den Höhenversatz (s₂) nach unten springt.

7. Abdichtungsanordnung nach Anspruch 5 oder 6, **dadurch gekennzeichnet, dass** der Höhenversatz (s₁) und/oder der Höhenversatz (s₂) mindestens 1 mm beträgt

## Claims

1. Sealing profile (100) which is intended for connecting an add-on part (1) to a windscreen (2) of a motor vehicle and comprises a retaining profile (3) having
- a retaining limb (4), which in the installed state is fastened on the lower surface (5) of the windscreen (2),
- an accommodating profile (6) for accommodating a connection element (7) of the add-on part (1),
- a supporting body (8), which in the installed state is arranged between the add-on part (1) and windscreen (2), and
- a sealing lip (9), which is arranged on the supporting body (8) and in the installed state butts with sealing action at least against the windscreen (2),
**characterized in that**, on its upper periphery, the sealing lip (9) has a planar surface (10), which in the installed state is free and which is oriented obliquely in relation to the retaining-limb plane (x) and is inclined in the direction of the accommodating profile (6), and **in that** the acute angle (α) enclosed by the free surface (10) and the retaining-limb plane (x) is at least 3°.

2. Sealing profile (100) according to Claim 1, **characterized in that** the acute angle (α) enclosed by the free surface (10) and the retaining-limb plane (x) is at least 5°.

3. Sealing profile (100) according to either of Claims 1 and 2, **characterized in that**, in the installed state, the sealing lip (9) has an at least essentially trapezoidal cross section.

4. Sealing profile (100) according to one of Claims 1 to 3, **characterized in that** the free surface (10) encloses an acute angle (β) with the elongate-orientation supporting body (8).

5. Sealing arrangement having
- a windscreen (2) of a motor vehicle,
- an add-on part (1), and
- a sealing profile (100) according to one of Claims 1 to 4, which is arranged between the windscreen (2) and add-on part (1) and is intended for connecting the add-on part (1) to the windscreen (2),
**characterized in that** there is an offset in height (s1) at the transition between the upper periphery of the windscreen (2) and the upper periphery of the sealing lip (9) and/or there is an offset in height (s2) at the transition between the upper periphery of the sealing lip (9) and the upper periphery of the add-on part (1).

6. Sealing arrangement according to Claim 5, **characterized in that**, as seen from the windscreen (2), the sealing lip (9) is set back in the downward direction by the offset in height (s1) and/or the add-on part (1) is set back in the downward direction by the offset in height (s2).

7. Sealing arrangement according to Claim 5 or 6, **characterized in that** the offset in height (s1) and/or the offset in height (s2) are/is at least 1 mm.

## Revendications

1. Profilé d'étanchéité (100) pour le raccordement d'une pièce rapportée (1) à une vitre (2) d'un véhicule automobile, comprenant un profilé de retenue (3) présentant :
- une branche de retenue (4) qui est fixée dans l'état de montage à la surface inférieure (5) de la vitre (2),
- un profilé de réception (6) pour recevoir un élément de raccordement (7) de la pièce rapportée (1),
- un corps de support (8) disposé dans l'état de montage entre la pièce rapportée (1) et la vitre (2) et
- une lèvre d'étanchéité (9) disposée sur le corps de support (8), laquelle s'applique hermétiquement dans l'état de montage au moins contre la vitre (2),
**caractérisé en ce que** la lèvre d'étanchéité (9) présente au niveau de son bord supérieur une surface libre (10) réalisée sous forme plane dans l'état de montage qui est orientée obliquement par rapport au plan de la branche de retenue (x), et qui est inclinée vers le profilé de réception (6) et **en ce que** l'angle aigu (α) formé par la surface libre (10) et le plan de la branche de retenue (x) vaut au moins 3°.

2. Profilé d'étanchéité (100) selon la revendication 1, **caractérisé en ce que** l'angle aigu (α) formé par la surface libre (10) et le plan de la branche de retenue (x) vaut au moins 5°.

3. Profilé d'étanchéité (100) selon l'une quelconque des revendications 1 à 2, **caractérisé en ce que** la lèvre d'étanchéité (9) présente, dans l'état de montage, une section transversale au moins essentiellement trapézoïdale.

4. Profilé d'étanchéité (100) selon l'une quelconque des revendications 1 à 3, **caractérisé en ce que** la surface libre (10) forme avec le corps de support orienté longitudinalement (8) un angle aigu (β).

5. Agencement d'étanchéité comprenant
- une vitre (2) d'un véhicule automobile,
- une pièce rapportée (1) et
- un profilé d'étanchéité (100) selon l'une quelconque des revendications 1 à 4, disposé entre la vitre (2) et la pièce rapportée (1), pour le raccordement de la pièce rapportée (1) à la vitre (2),
**caractérisé en ce qu'**au niveau de la transition entre le bord supérieur de la vitre (2) et le bord supérieur de la lèvre d'étanchéité (9) est réalisé un décalage en hauteur (s1) et/ou au niveau de la transition entre le bord supérieur de la lèvre d'étanchéité (9) et le bord supérieur de la pièce rapportée (1) est réalisé un décalage en hauteur (s2).

6. Agencement d'étanchéité selon la revendication 5, **caractérisé en ce que** vu depuis la vitre (2), la lèvre d'étanchéité (9) fait saillie vers le bas dans la mesure du décalage en hauteur (s1) et/ou la pièce rapportée (1) fait saillie vers le bas dans la mesure du décalage en hauteur (s2).

7. Agencement d'étanchéité selon la revendication 5 ou 6, **caractérisé en ce que** le décalage en hauteur (s1) et/ou le décalage en hauteur (s2) valent au moins 1 mm.
